# EUROPEAN PATENT SPECIFICATION

(11) **EP 0 465 435 B1**
(45) Date of publication and mention of the grant of the patent: **11.05.1994**
(21) Application number: 91830216.7
(22) Date of filing: 23.05.1991
(51) Int. Cl.: B23B 39/18

(54) **Multiple head machine tool for machining panels**
Mehrspindel-Werkzeugmaschine zur spanabhebenden Bearbeitung von Platten
Machine-outil à broches multiples pour usiner des plaques

(30) Priority: 25.06.1990 IT 2075290
(43) Date of publication of application: 08.01.1992
(73) Proprietor: ALBERTI VITTORIO S.p.A., I-20063 Cernusco sul Naviglio (IT)
(72) Inventor: Alberti, Luigi, I-20063 Cernusco sul Naviglio (IT)
(74) Representative: Cicogna, Franco

(56) References cited:
- AT-B- 335 819
- DE-A- 1 477 397
- DE-A- 3 208 864
- FR-A- 2 509 643
- GB-A- 806 853

## Description

The present invention relates to a multiple head macchine tool, which has been specifically designed for machining panels and the like.

There are already known machine tools for machining panels, for example for milling, shaping, contouring said panels, which generally comprise a multiple head which is driven on the panel in order to perform the desired machining operations.

These prior machine tools, however, are affected by some drawbacks the main of which is that the machining head can not be precisely driven in the two main working directions, because of vibrations generated during the displacements of the working head.

Another drawback affecting these prior machine tools is that said prior machines are rather dangerous for the operator since the machining tools of said prior machines are driven to regions which are very near to the operator.

The document DE-A-1 477 397 discloses a multiple head machine tool for machining panels having substantially the features of the pre-characterizing part of the main claim.

### SUMMARY OF THE INVENTION

Accordingly, the aim of the present invention is to overcome the above mentioned drawbacks, by providing a multiple-head machine tool, which has been specifically designed for machining panels and the like, in which the related displacements of the panel to be machined and the tool bearing head are mutually separated so as to provide an assembly which is very stable and affords the possibility of performing very accurate machining operations.

Within the scope of the above mentioned aim, a main object of the present invention is to provide such a multiple head machine tool the working operating zone of which can not be easily accessed by the operator thereby providing very safe operating conditions.

Another object of the present invention is to provide such a multiple head machine tool which is very reliable in operation.

Yet another object of the present invention is to provide such a machine tool, specifically designed for machining panels and the like, which can be easily made starting from easily available elements and materials.

According to one aspect of the present invention, the above mentioned aim and objects, as well as yet other objects, which will become more apparent thereinafter, are achieve by a multiple head machine tool for machining panels, having the features of the main claim.

### BRIEF DESCRIPTION OF THE DRAWINGS

Further characteristics and advantages of the present invention will become more apparent hereinafter from the following detailed description of a preferred, though not exclusive embodiment, of a multiple head machine tool, specifically designed for machining panels, which has been illustrated, by way of an indicative but not limitative example, in the accompanying drawings, where:
Figure 1 is a top view of the machine tool according to the present invention;
Figure 2 is an end view of the machine tool according to the invention;
Figure 3 is a cross-sectional view of the machine tool according to the invention, and clearly illustrates the panel supporting surface thereof;
Figure 4 is a schematic top plan view of a panel supporting surface included in the machine tool according to the invention;
Figure 5 is a front view of a machine tool according to the invention including a modification of its supporting framework; and
Figure 6 is a side elevation view of the machine tool shown in figure 5

### DESCRIPTION OF THE PREFERRED EMBODIMENTS

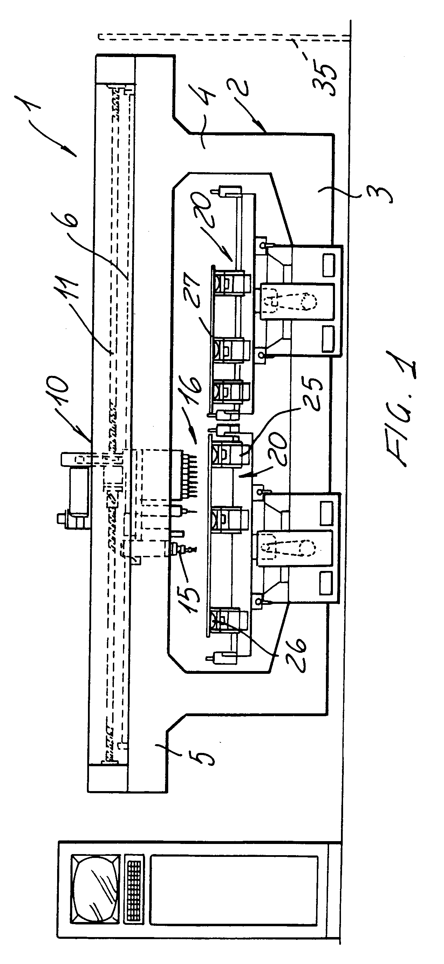

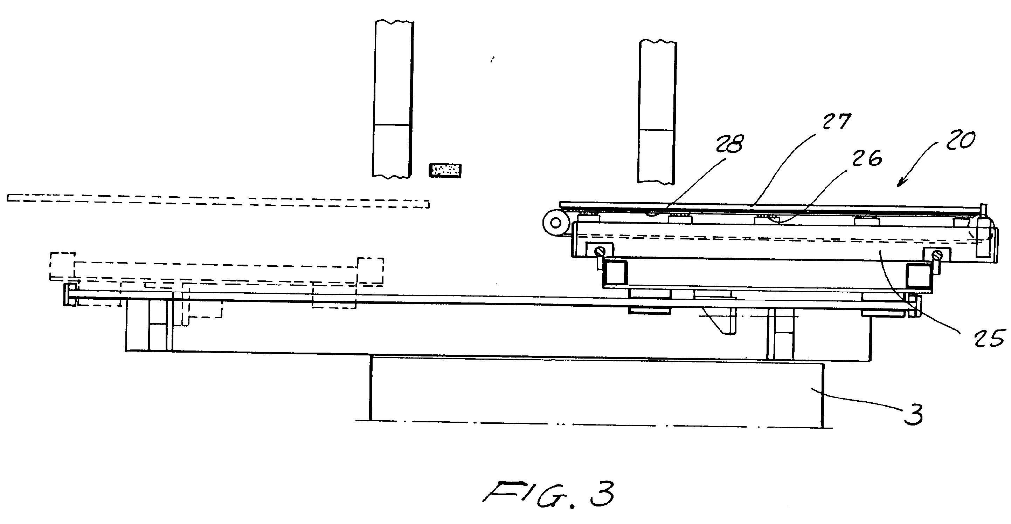

With reference to the figures of the accompanying drawings, and, in particular, to figures 1 to 4 thereof, the multiple head machine tool, specifically designed for machining panels and the like, according to the present invention, and which has been overally indicated at the reference number 1, comprises a bearing framework 2 which substantially includes a framework bed 3 therefrom uprights 4 extend which support cross members 5 projecting at the ends with respect to the bed 3.

The cross members 5 are provided with driving rods 6 thereon a tool assembly, indicated overally at the reference number 10, can slide in a first direction, through a worm screw 12, extending parallel to the driving rods 6

The multiple head tool assembly 10 is substantially provided with a milling assembly, overally indicated at the reference number 15, and a plurality of drills 16 which are arranged with an adjoining relationship and can be individually driven in order to independently operate according to a variable set number.

Likewise, the milling tool can be independently driven and is operated in order to perform contouring operations for forming seats for housing wash basins, openings for housing computers, grooves, and any other types of machining operations.

On the bed 3 there are provided one or more panel bearing surfaces, overally indicated at the reference number 20, which can be driven either in an independent or in a timed way, along a second direction which is perpendicular to the driving direction of the multiple head tool assembly 10.

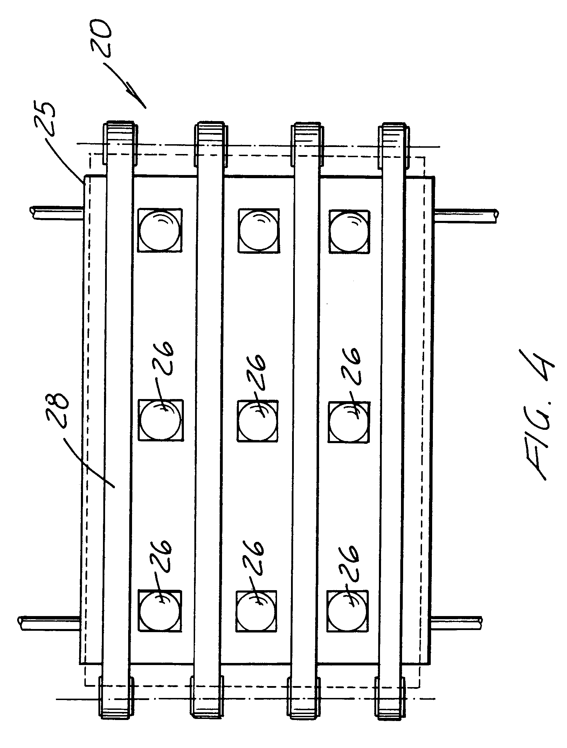

Each panel bearing assembly, as is clearly shown in figure 4, is provided with a base 25 which can slide on sliding guides in a perpendicular direction to the tool assembly driving direction and supports a plurality of suckers 26, which can be connected to a vacuum source, in order to restrain at a desired restraining position the panels to be machined, which have been schematically indicated at 27.

Between the suckers 26 there are arranged endless belts 28, which are provided for loading and unloading the panels, at the end of the processing thereof.

The construction of the above disclosed machine is very advantageous since the side zone thereof, in which the panel bearing assemblies are arranged, is protected by protecting rails 30, preventing the operator from excessively approaching the tool heads.

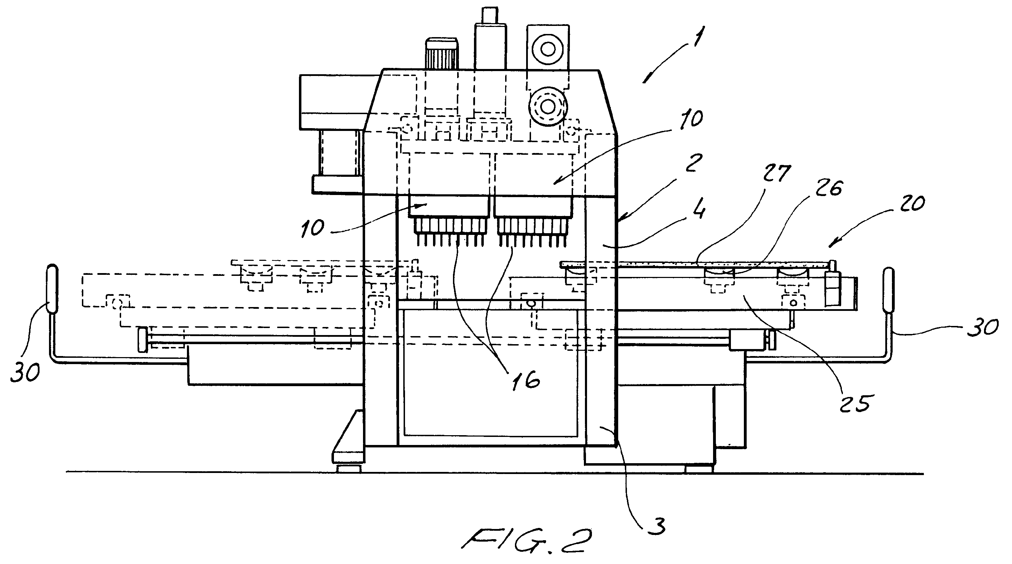

These tool heads, as is clearly shown in figure 2, can be arranged in an adjoining relationship by pairs, so as to perform multiple processing operations, which can be either timed or not.

Another main feature of the machine tool according to the present invention is that the top cross members 5 project from the base 3 at the longitudinal end portions thereof, so that the tool head can be moved away from the base as the drills or tools supported thereby must be replaced.

Moreover, automatic locking devices can be provided for locking the several tool bearing mandrels, and a further safety locking device 35 can be arranged in order to lock the drive as the operator must replace the tools.

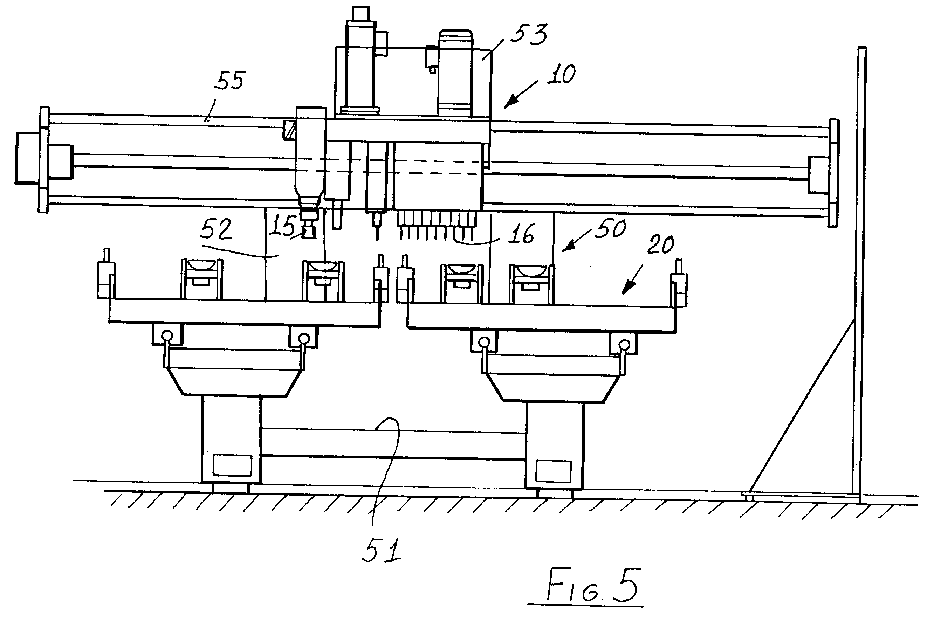

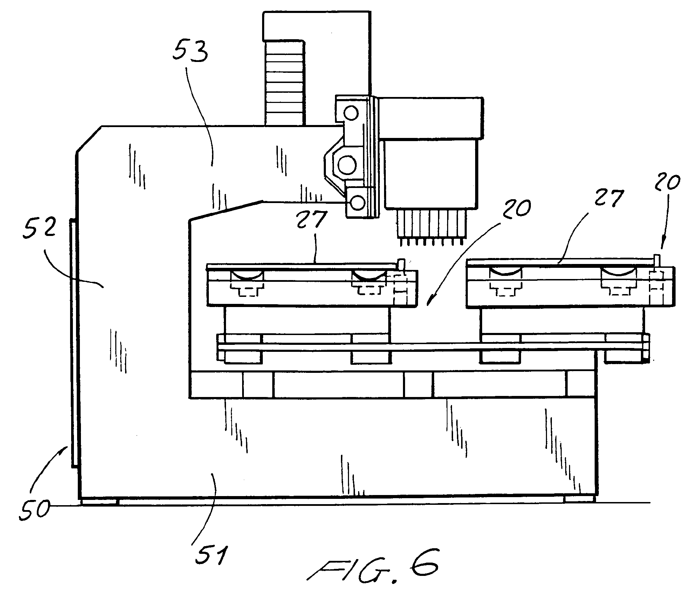

Figures 5 and 6 illustrate a modified embodiment of the subject machine tool which comprises all of the features thereinabove disclosed with the exception that it includes a single tool bearing assembly, indicated at 10, and a supporting framework, indicated at 50.

The framework 50, in particular, has a C-shape with a bottom base 51 supporting the panel bearing assemblies: from this base an upright 52 extends which ends with a cantilever arm member 53 supporting longitudinal guides 55 adapted to slidably receive thereon the tool bearing head.

From the above disclosure it should be apparent that the invention fully achieves the intended aim and objects.

In particular, a multiple head machine tool has been provided which is adapted to allow an operator to operate under very safe conditions since the machining displacements are in part provided by the tool multiple head, which displaces the machining tools in a first direction, and in part by the panel supporting assembly, which is driven in a reverse direction.

Moreover, the machining zone is always spaced from the zones accessible for the operator.

Another important aspect of the invention is that, during the replacement of the tools, the tool head can be displaced to the end portions of the top part of the framework, that is a region not affected by the bottom bed, thereby facilitating the replacing operations.

To the foregoing it is to be added that on the disclosed machine tool a cutting device can be further assembled, including a cutting blade adapted to rotate through 90°.

## Claims

1. A multiple head machine tool (1) for machining panels (27), said machine tool comprising a bearing framework (2, 50) provided, at the top thereof, with driving means for supporting a multiple head tool assembly (10), which can be reciprocated in a first direction and, at the bottom thereof, with a supporting bed (3) supporting at least a panel bearing assembly (20), which can be displaced along a second direction substantially perpendicular to the first direction, said bearing framework (2) comprising a framework bed supporting uprights (4) which in turn support cross members (5) projecting at the longitudinal end portions thereof from said bed (3), said cross members (5) supporting driving rods (6) adapted to slidably support thereon said multiple head tool assembly (10), in said first direction, a worm screw (12) being moreover provided which extends substantially parallel to said driving rods (6) for displacing said tool assembly (10), said tool assembly (10) comprising a plurality of tools (15, 16), mounted on tool mandrels, which are arranged with a mutual adjoining relationship and can be individually driven in order to operate one independently from the other, characterized in that said machine tool (1) further comprises a plurality of panel supporting assemblies (20) which can be independently displaced from one another or driven in a timed way, in a second direction perpendicular to said first direction, that each panel bearing assembly (20) is provided with a base (25) which can slide on sliding guides in a direction perpendicular to said first direction and being provided with a plurality of suckers (26), adapted to be connected to a vacuum source, in order to restrain at a set machining position the panels (27) to be machined, and that said machine tool further comprises endless belts (28), arranged between said suckers (26), in order to load and unload said panels (27) on said machine tool (1).

2. A multiple head machine tool, according to the preceding claim, characterized in that said machine tool (1) further comprises, at a side zone affected by said panel bearing assemblies (20), a protecting rail (30).

3. A multiple head machine tool, according to one or more of the preceding claims, characterized in that said multiple head tool assembly can be arranged, at the end of the guide elements thereof, on the outside of the zone affected by the bed (3), for replacing the tools.

4. A multiple head machine tool, according to one or more of the preceding claims, characterized in that said bearing framework (50) has a substantially C-shape, with a bottom base (51) supporting said panel bearing assemblies, from said base extending an upright (52) which cantilever supports an arm element (53) in turn supporting longitudinal guides (55) thereon said multiple head tool assembly can slide.

5. A multiple head machine tool, according to one or more of the preceding claims, characterized in that said machine tool (1) is further adapted to receive thereon a cutting device including a cutting blade which can be rotated through 90°.

## Patentansprüche

1. Eine Mehrkopfwerkzeugmaschine (1) für Arbeitsflächen (27), diese Werkzeugmaschine umfassend ein Tragegerüst (2, 50), das an seinem oberen Ende mit einer Steuervorrichtung zum Tragen einer Mehrkopfwerkzeugmontage (10) ausgestattet ist, die alternierend in einer ersten Richtung bewegt werden kann, und an seinem unteren Ende mit einem Stützbett (3), das mindestens eine Flächentragemontage (20) trägt, die längs einer zweiten, zur ersten im wesentlichen senkrechten Richtung bewegt werden kann, dieses Tragegerüst (2) umfassend das Gerüstbett tragende Stützpfeiler (4), die ihrerseits Querteile (5) tragen, die sich an deren longitudinalen Enden von diesem Bett (3) aus erstrecken; diese Querelemente (5) tragen Antriebsstangen (6), angepaßt, dort in diese erste Richtung verschiebbar diese Mehrkopfwerkzeugmontage (10) zu tragen, weiterhin eine Endlosschraube (12) umfassend, die sich im wesentlichen parallel zu diesen Antriebsstangen (6) erstreckt, zum Bewegen dieser Werkzeugmontage (10); diese Werkzeugmontage (10) umfassend eine Vielzahl von Werkzeugen (15, 16), auf Werkzeugdornen angebracht, die in einer untereinander benachbarten Beziehung angebracht sind und einzeln gesteuert werden können, um so voneinander unabhängig zu wirken, dadurch gekennzeichnet, daß diese Werkzeugmaschine (1) weiterhin eine Vielzahl von Flächentragemontagen (20) umfaßt, die in eine zweite, zu dieser ersten senkrechte Richtung voneinander unabhängig versetzt oder zeitlich gesteuert werden können, daß jede Flächentragemontage (20) eine Basis (25) umfaßt, die in Gleitführungen in einer zu dieser ersten senkrechten Richtung gleiten kann und mit einer Vielzahl von Saugnäpfen (26) ausgestattet ist, zum Anschluß an eine Vakuumquelle angepaßt, um so die zu bearbeitenden Flächen (27) an einer gegebenen Bearbeitungsposition zu fixieren, und daß diese Werkzeugmaschine weiterhin Endlosförderbänder (28) umfaßt, zwischen diesen Saugnäpfen (26) angebracht, um so diese Flächen (27) auf dieser Werkzeugmaschine (1) zu beladen und zu entladen.

2. Eine Mehrkopfwerkzeugmaschine gemäß dem vorhergehenden Anspruch, dadurch gekennzeichnet, daß diese Werkzeugmaschine (1) weiterhin eine Schutzplanke (30) in einem Seitenbereich umfaßt, der von diesen Flächentragemontagen (20) berührt wird.

3. Eine Mehrkopfwerkzeugmaschine gemäß einem oder mehrerer der vorhergehenden Ansprüche, dadurch gekennzeichnet, daß diese Mehrkopfwerkzeugmontage am Ende ihrer Führungsteile an die Außenseite der vom Bett (3) berührten Zone gebracht werden kann, um die Werkzeuge auszutauschen.

4. Eine Mehrkopfwerkzeugmaschine gemäß einem oder mehrerer der vorhergehenden Ansprüche, dadurch gekennzeichnet, daß dieses Tragegerüst (50) im wesentlichen C-förmig ist, mit einer Grundfläche (51), die diese Flächentragemontagen trägt, von dieser Grundfläche erstreckt sich ein Stützpfeiler (52), der freitragend ein Armteil (53) trägt, seinerseits longitudinale Führungen (55) tragend, auf denen diese Mehrkopfwerkzeugmontage gleiten kann.

5. Eine Mehrkopfwerkzeugmaschine gemäß einem oder mehrerer der vorhergehenden Ansprüche, dadurch gekennzeichnet, daß diese Werkzeugmaschine (1) weiterhin angepaßt ist, eine Schneidvorrichtung mit einer Schneidklinge aufzunehmen, die um 90° gedreht werden kann.

## Revendications

1. Machine-outil à plusieures têtes (1) pour panneaux d'usinage (27), ladite machine-outil comprenant une charpente de support (2, 50), pourvue en haut d'un dipositif de commande pour supporter un assemblage d'outils à plusieures têtes (10), qui peut être mû alternativement le long d'une première direction, et en bas d'un banc de support (3) supportant au moins un assemblage de support de panneaux (20), qui peut être déplacé le long d'une seconde direction substantiellement perpendiculaire à la première direction, ladite charpente de support (2) comprenant des poinçons (4) supportant le banc de charpente qui à leur tour portent des éléments transversaux (5) qui se projetent vers les extrémités longitudinales de ceux-ci à partir dudit banc (3), lesdits éléments transversaux (5) supportant des barres de comande (6) adaptées à supporter à glissement dans ladite première direction ledit assemblage d'outils à plusieures têtes (10), une vis sans fin (12) étant en plus prévue s'étendant substantiellement parallèlement auxdites barres de commande (6) afin de déplacer ledit assemblage d'outils (10), ledit assemblage d'outils (10) comprenant une multiplicité d'outils (15, 16) montés sur des mandrins d'outil, qui sont arrangés avec une rélation mutuelle avoisinante et qui peuvent être comandés individuellement afin d'opérer indépendemment les uns des autres, caractérisée en ce que ladite machine-outil (1) en plus comprend une multiplicité d'assemblages de support de panneaux (20), qui peuvent être déplacés séparément les uns des autres ou comandés d'une manière chronométrée le long d'une seconde direction perpendiculaire à ladite première direction, en ce que chaque assemblage de support de panneaux (20) est pourvu d'une base (25) qui peut glisser sur des guides à glissement le long d'une direction perpendiculaire à ladite première direction et est pourvu d'une multiplicité de ventouses (26), adaptées à être connectées à une source de vide afin de fixer à une déterminée position d'usinage les panneaux (27) qui doivent être usinés, et en ce que ladite machine-outil en plus comprend des bandes sans fin (28) arrangées au milieu desdites ventouses (26), afin de charger et de décharger lesdits panneaux (27) sur ladite machine-outil (1).

2. Machine-outil à plusieures têtes selon la Revendication précédente, caractérisée en ce que ladite machine-outil (1) en plus comprend, en correspondance d'une zone latérale fréquentée par lesdits assemblages de support de panneaux (20), une traverse de protection (30).

3. Machine-outil à plusieures têtes selon l'une ou plusieures des Revendications précédentes, caractérisée en ce que ledit assemblage d'outils à plusieures têtes peut être arrangé, aux extrémités de ses éléments de guidage, à l'extérieur de la zone affectée par le banc (3), afin de remplacer les outils.

4. Machine-outil à plusieures têtes selon l'une ou plusieures des Revendications précédentes, caractérisée en ce que ladite charpente de support (50) a une forme substantiellement de C, avec une base (51) supportant lesdits assemblages de support de panneaux, de ladite base s'étendant un poinçon (52) qui supporte en porte à faux un bras (53), à son tour supportant des guides longitudinaux (55) sur lesquels ledit assemblage d'outils à plusieures têtes peut glisser.

5. Machine-outil à plusieures têtes selon l'une ou plusieures des Revendications précédentes, caractérisée en ce que ladite machine-outil (1) est en plus adaptée à loger un dispositif de coupage comprenant une lame de coupage qui peut être tournée de 90°.
